(19) Europäisches Patentamt
European Patent Office
Office européen des brevets

(11) Veröffentlichungsnummer: **0 246 445**
**B1**

(12) **EUROPÄISCHE PATENTSCHRIFT**

(45) Veröffentlichungstag der Patentschrift: **09.01.91**

(21) Anmeldenummer: **87105405.2**

(22) Anmeldetag: **11.04.87**

(51) Int. Cl.$^5$: **C 09 D 11/10,** C 09 D 163/00, C 08 G 59/22, C 08 G 59/58 // C08L63/00

# (54) Verwendung von härtbaren Kunstharzmischungen für Oberflächenbeschichtungen und Druckfarben und Verfahren zu ihrer Herstellung.

(30) Priorität: **17.05.86 DE 3616824**

(43) Veröffentlichungstag der Anmeldung: **25.11.87 Patentblatt 87/48**

(45) Bekanntmachung des Hinweises auf die Patenterteilung: **09.01.91 Patentblatt 91/02**

(84) Benannte Vertragsstaaten: **BE CH DE ES FR GB GR IT LI NL SE**

(56) Entgegenhaltungen:
**EP-A-0 047 364**
**FR-A-1 538 818**
**GB-A-2 073 222**
**GB-A-2 087 895**
**US-A-3 507 817**
**US-A-4 025 578**

(73) Patentinhaber: **SCHERING AKTIENGESELLSCHAFT Berlin und Bergkamen**
**Ernst-Schering-Strasse 14 Postfach 15 40**
**D-4709 Bergkamen (DE)**

(72) Erfinder: **Drawert, Manfred, Dr. Dipl.-Chem.**
**Alte Kreisstrasse 13**
**D-5758 Fröndenberg (DE)**
Erfinder: **Krase, Horst**
**Unterster Kamp 14**
**D-4700 Hamm 1 (DE)**
Erfinder: **Skoda, Hans Dieter**
**Friedrich-Hebbel-Strasse 8**
**D-4712 Werne (DE)**

**EP 0 246 445 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft die Verwendung von härtbaren Kunstharzmischungen, die nach dem Abdunsten des Lösungsmittels physikalisch trockene und klare Filme ergeben und die bei Raumtemperatur bzw. wenig erhöhter Temperatur aushärten, als Bindemittel für Oberflächenbeschichtungen und Druckfarben, wobei die Kunstharzmischungen aus mindestens einer aliphatischen Glycidylverbindung, einer oder mehreren Aminkomponenten, thermoplastischen Harzen mit freien Carboxylgruppen, Lösungsmitteln und üblichen Hilfsstoffen bestehen.

Es ist bekannt, zur Herstellung von Oberflächenbeschichtungen und Druckfarben härtbare Kunstharzmischungen auf Basis von Epoxidharzen und aminischen Härtungsmitteln einzusetzen. Diese Systeme werden aber in der Regel ausschließlich aus organischen Lösungsmitteln verdruckt.

Es ist weiterhin bekannt, thermoplastische Harze als einkomponentige Druckfarbenbindemittel einzusetzen, welche aber ebenfalls in organischen Lösungsmitteln gelöst werden müssen.

Infolge des stetig gewachsenen Umweltbewußtseins mußten deshalb kostenintensive Maßnahmen zur Rückgewinnung dieser Lösungsmittel getroffen werden.

Es hat daher nicht an Versuchen gefehlt, das organische Lösungsmittel ganz oder teilweise durch Wasser als Lösungsmittel zu ersetzen.

So wurden bei den härtbaren Kunstharzmischungen die aminischen Härtungsmittel in dem Maße mit anorganischen oder organischen Säuren versetzt, bis durch die Salzbildung die Löslichkeit in Wasser gegeben war. Die Epoxidharze wurden dann vor Verbrauch direkt in diesen Härterlösungen dispergiert oder als Dispersion bzw. Emulsion zugesetzt, wobei in der Regel weitere Emulgatoren, Schutzkolloide, oberflächenaktive Mittel mitverwendet werden mußten. Nach dem Abdunsten des Lösungsmittels sind die erhaltenen Oberflächen nicht klebfrei.

Bei dem Einkomponentensystem auf basis von thermoplastischen Harzen wie z.B. Polyamiden, Polyesteramiden, Polyestern, Polyurethanen, Polyacrylaten, Styrol/Maleinsäure-Polymerisatharzen, Vinylacetat/Crotonsäure-Copolymeren, Maleinatharzen, wurde die Löslichkeit in Wasser ebenfalls angestrebt. Man verfährt dabei üblicherweise so, daß man Harze mit erhöhten bis hohen Carboxylgruppengehalten (quantifiziert durch die Angabe der Säurezahlen) herstellt und diese dann durch Zugabe von anorganischen und organischen Basen neutralisiert.

Carboxylgruppenhaltige Harze dieser Art gehören zum Stand der Technik und sind beschrieben beispielsweise in den US-Patentschriften 3 355 409, 3 778 394, 3 844 991, 3 882 090, 3 945 983, 4 365 041, 3 563 937, 3 533 811, in der DE—AS 1 794 303 und der DE—AS 1 794 309.

Nach der Neutralisation mit Ammoniak oder leicht flüchtigen Aminen sind die Harze wasserlöslich und zum Teil auch ausreichend wasserverdünnbar. Diese Druckfilme erfüllen z.T. auch die Anforderung hinsichtlich Haftung, Glanz, Verdruckbarkeit.

Unabhängig von der Art des eingesetzten Harzes entsprechen die Filme insbesondere nicht den Anforderungen der Praxis hinsichtlich ihrer Beständigkeit gegenüber Wasser, wässrigen Lösungen von Säuren, Alkalien und Detergentien.

Auch die verschiedenen Variationen von leicht flüchtigen Aminen bis zu Ammoniak brachten keinen durchgreifenden Erfolg hinsichtlich der Verbesserung der Wasserbeständigkeit der gehärteten Filme.

Dem alternativen Einsatz von wasserlöslichen Epoxidharzen und Härtungsmitteln stand die Auffassung entgegen, daß die bekannten wasserlöslichen aliphatischen Epoxidharze nur wenig oder keine der Beständigkeitseigenschaften besäßen, die normalerweise von Epoxidharzen erwartet würden.

In der US—PS 3 507 817 werden Mischungen aus Polyacrylaten und Epoxidharzen, welche aus Kostengründen mit Carbohydratpolyethylen verschnitten werden (Spalte 2 Zeilen 3—8 und 36—40), beschrieben. Die Härtung erfolgt in der Regel bei erhöhter Temperatur zwischen der Carboxylgruppe des Polyacrylates und der Epoxidgruppe, wobei gegebenenfalls geringe Mengen an basischen Katalysatoren wie Amine mitverwendet werden können (Spalte 1 Zeilen 35—38 und 44—47). Aus Spalte 3 Zeilen 8—21 geht hervor, daß der Carbohydratpolyether an der Reaktion beteiligt, d.h. in das System eingebaut wird.

Im Gegensatz dazu verläuft erfindungsgemäß die Reaktion zwischen Amingruppen und Epoxidgruppen bei Raumtemperatur, wobei auch die an der Salzbildung mit den COOH-Gruppen beteiligten Aminogruppen letztlich in die Epoxid-Reaktion einbezogen werden. Daraus folgt, daß wiederum im Gegensatz zur o.a. angeführten US—PS 3 507 817 die erfindungsgemäße thermoplastische Komponente (C) nicht in die Reaktion einbezogen und eingebaut wird, sondern in freier Form in der Mischung verbleibt.

Gemäß der GB—A—2 073 222 werden ebenfalls Polyamide mit endständigen COOH-Gruppen, hergestellt aus dimerer Fettsäure und Aminen mit Epoxidgruppen, gegebenenfalls unter Mitverwendung von tertiären Aminen als Katalysatoren zu Polyesteramiden umgesetzt (Seite 1 Zeilen 29—40; Seite 2 Zeilen 39—48). Diese Reaktion findet ebenfalls bei erhöhter Temperatur von 100—150°C statt (Seite 2 Zeile 50). Die Reaktionsprodukte weisen Säurezahlen von 0—30 (0—5) (Seite 2 Zeilen 52/53) auf und können nur in höheren Alkoholen gelöst werden und werden ohne weitere Maßnahmen (keine reaktive Mischung) als Druckfarben eingesetzt.

In der GB—A—2 087 895 werden wässrige Dispersionen (keine Lösungen) eines Reaktionsproduktes aus Epoxidharz-Amin-Addukten mit COOH-Gruppe enthaltenden Harzen beschrieben. Gemäß Seite 2 Zeilen 91—97 werden eventuell vorhandene freie Epoxidgruppen durch Erhitzen mit den Carboxylgruppen

umgesetzt, so daß in der gebrauchsfertigen Mischung keine freien Epoxidgruppen mehr vorliegen. Zur Erzielung einer ausreichenden Härtungsgeschwindigkeit ist Erhitzung auf mindestens 100°C bzw. 140°C erforderlich (Seite 3 Zeilen 31—34).

In der US—PS 4 025 578 werden elastische Vulkanisate beschrieben, welche hergestellt werden durch Erhitzen einer Mischung aus Epoxidharz, aromatischem Diol, einem flüssigen Harz mit endständigen COOH-Gruppen und welche als Härtungsmittel eine geringe Menge eines Amins enthalten. Auch diese Mischungen sind nicht vergleichbar mit den erfindungsgemäßen reaktiven Mischungen und müssen bei Temperaturen von 100°C—180°C ausgehärtet werden.

Als mögliche Maßnahmen zur Verbesserung der Filmqualität wurden daher neben Optimierung der bekannten Formulierungen eingehende Änderungen an den Trocknungsvorrichtungen der Druckmaschinen diskutiert. Hierbei müssen aber die Trocknungstemperaturen aufgrund der Materialeigenschaften der Substrate zum Teil innerhalb enger Grenzen gehalten werden.

Da es aufgrund des bekannten Standes der Technik nicht möglich war, die bestehenden Nachteile mit den bislang auf diesem Gebiet praktizierten Methoden allein von der Bindemittelseite her zu beseitigen, wurde nunmehr eine andersartige neue Methode angewandt, welche die Herstellung von wasserlöslichen und wasserverdünnbaren Druckfarbenbindemitteln gestattet, welche mit den bekannten Druckmaschinen unter üblichen Bedingungen verdruckt werden können und nach dem Druckvorgang die gehärteten Druckfilme neben den positiven Eigenschaften der bekannten Systeme insbesondere eine ausgezeichnete Bständigkeit gegen Wasser und wässrige Systeme aufweisen.

Gegenstand der Erfindung ist daher die Verwendung von härtbaren Kunstharzmischungen, die nach dem Abdunsten des Lösungsmittels physikalisch trockene und klare Filme ergeben und die bei Raumtemperatur bzw. wenig erhöhter Temperatur aushärten, als Bindemittel für Oberflächenbeschichtungen und Druckfarben für den Tief-, Flexo- und Siebdruck, die dadurch gekennzeichnet sind, daß die Kunstharzmischungen bestehen aus

A) mindestens einer aliphatischen Glycidylverbindung mit mehr als einer Epoxidgruppe pro Molekül und

B) 1. aliphatischen Aminen der allgemeinen Formel

$$H_2N—(CHR)_x—NH_2 \qquad I$$

in welcher R Wasserstoff oder als Alkylrest mit 1—4 C-Atomen und x ein Wert von 2—6 sein kann und/oder

2. Polyalkylenpolyaminen der allgemeinen Formel

$$H_2N{+}(CHR)_x—NH{—}\!\!]_y H \qquad II$$

in welcher R und x die obengenannte Bedeutung und y die Werte 2—4 haben kann und/oder

3. Polyätheraminen der allgemeinen Formel

$$H_2N—(CH_2)_n—O{+}R^1—O{+}_z(CH_2{+}_n NH_2 \qquad III$$

in welcher $R^1$ ein gegebenenfalls substituierter Alkylrest mit 1—4 Kohlenstoffatomen, z = 0, 1, 2 oder 3 und n = 2—5 sein kann und/oder

4. heterocyclische Amine der allgemeinen Formel

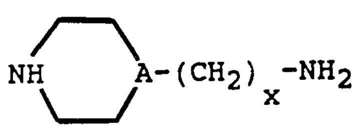

IV

in welcher A = C oder N und x ein Wert von 2—6 sein kann und/oder

5. Alkanolamine der allgemeinen Formel

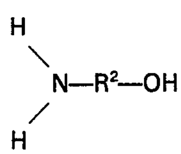

V

mit $R^2 = (CRR)_x—$

worin R und x die oben angegebene Bedeutung haben oder $R^2 = —(CHC_2)_2—O—(CH_2)_2$ und/oder

6. Addukten mit freien Amingruppen aus

a) aliphatischen Glycidylverbindungen gemäß A) und

b) mindestens einem der Amine 1. bis 4. und gegebenenfalls bis 50 Äquivalent-% eines der Amine gemäß 5.,

und worin pro Epoxidgruppe gemäß a) 0,8 bis 1,2 Mol, vorzugsweise 1 Mol, des Amins eingesetzt wird und

C) thermoplastischen Harzen mit freien Carboxylgruppen und einer Säurezahl von 40—200 und wobei pro Carboxylgruppe gemäß C) 1 bis 10, vorzugsweise 1—4, Aminogruppen eines oder mehrerer der Amine gemäß

B) kommen und

D) Lösungsmitteln oder Lösungsmittelmischungen und gegebenfalls

E) Pigmenten, Farbstoffen, Beschleunigern, reaktiven Verdünnern, Streck-, Benetzungs- und Verlaufsmitteln, Modifizierungsmitteln.

Als Glycidylverbindungen gemäß A) werden erfindungsgemäß wasserlösliche Glycidyläther auf Basis von aliphatischen, gegebenenfalls verzweigten Alkoholen wie Hexandiol, Neopentylglykol, Glycerin, Trimethylolpropan, Diglycerin, Pentaerythrit verwendet, welche Epoxidwerte im Bereich von 0,4 bis 0,7, insbesondere von 0,6 bis 0,7 aufweisen.

Mischungen zweier oder mehrerer dieser Glycidyläther sind ebenso möglich wie die Mitverwendung monofunktioneller Glycidyläther wie insbesondere Butylglycidyläther, vorausgesetzt, die Mischung enthält im Mittel mehr als eine Epoxidgruppe.

Als aliphatische Amine gemäß B) werden erfindungsgemäß Diamine der allgemeinen Formel

$$H_2N—(CHR)\ 43—NH_2 \qquad I$$

in welcher x ein Wert von 2—6 und R Wasserstoff oder ein Alkylrest mit 1—4 C-Atomen, insbesondere der Methylrest sen kann, wie Diaminoethan, Diaminopropan, Diaminobutan, Diaminohexan, 2,2,4(4,4,2)-Trimethyl-1,6-diaminohexan und/oder Polyalkylenpolyamine der allgemeinen Formel

$$H_2N\{(CHR)_x—NH\}_yH \qquad II$$

in welcher R und x die obengenannte Bedeutung und y die Werte 2—4 haben kann wie Diethylentriamin, Triethylentetramin, Tetraethylenpentamin, die analogen Polypropylenpolyamine sowie die durch Cyanethylierung von Polyaminen, insbesondere des Ethylendiamins, und anschließende Hydrierung erhaltenen Polyamide (Firmenprospekt der BASF AG, 1976) und/oder Polyetheramine der allgemeinen Formel

$$H_2N—(CH_2)_n—O\{R^1—O\}_z(CH_2)_nNH_2 \qquad III$$

in welcher $R^1$ ein gegebenenfalls substituierter Alkylrest mit 1—4 C-Atomen, $z = 0, 1, 2$ oder 3 und $n = 2—5$ sein kann, wie 1,7-Diamino-4-oxa-heptan, 1,7-Diamino-3,5-dioxa-heptan, 1,10-Diamino-4,7-dioxa-decan, 1,10-Diamino-4,7-dioxa-5-methyldecan, 1,11-Diamino-6-oxa-undecan, 1,11-Diamino-4,8-dioxaundecan, 1,11-Diamino-4,8-dioxa-5-methylundecan, 1,11-Diamino-4,8-dioxa-5,6-dimethyl-7-propionylundecan, 1,13-Diamino-4,10-dioxa-tridecan, 1,13-Diamino-4,7,10-trioxa-5,8-dimethyl-tridecan, 1,14-Diamino-4,11-dioxa-tetradecan, 1,14-Diamino-4,7,10-trioxatetradecan, 1,16-Diamino-4,7,10,13-tetraoxa-hexadecan, 1,20-Diamino-4,17-dioxa-eicosan, insbesondere 1,12-Diamino-4,9-dioxadodecan und/oder heterocyclische Amine der allgemeinen Formel

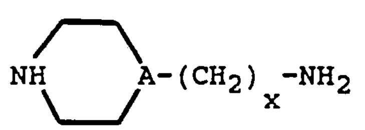

IV

in welcher A ein Kohlenstoff- oder Stickstoffatom und x ein Wert von 2—6 sein kann wie insbesondere N-Aminoethylpiperazin und/oder Alkanolamine der allgemeinen Formel

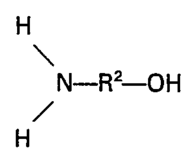

worin $R^2$ = —(CRR)—, mit R und x gleich obiger Bedeutung, oder $—(CH_2)_2—O—(CH_2)_2$ bedeutet wie 2-Amino-2-methyl-propanol-(1), 2-Dimethylamino-2-methyl-propanol-(1), 1-Hydroxy-3-oxa-5-amino-pentan und/oder Addukten mit freien Aminogruppen aus

a) aliphatischen Glycidylverbindungen gemäß A) und

b) mindestens einem der Amine gemäß B 1) bis B 4), und gegebenenfalls bis 50 Äquivalent-%, bezogen auf Gesamtaminmenge, eines der Amine gemäß 5., und worin pro Epoxidgruppe gemäß a) 0,8—1,2 Mol, vorzugsweise 1,0 Mol, des Amins eingesetzt wird, und als Epoxidverbindung vorzugsweise Hexandioldiglycidylether mit Ethylendiamin adduktiert wird.

Die erfindungsgemäß mitverwendeten freie Carboxylgruppen aufweisenden thermoplastischen Harze sind die auf diesem Gebiet üblichen Polyamide, Polyesteramide, Polyester, Polyurethane, Polyacrylate, Styrol/Maleinsäure-Polymerisatharze, Vinylacetat/Crotonsäure-Copolymere, Maleinatharze. Art und

Menge der zu ihrer Herstellung verwendeten Komponenten sowie die Herstellungsverfahren sind in der einschlägigen Fachliteratur ausgiebig beschrieben.

Erfindungsgemäß können alle diese Harze eingesetzt werden, vorausgesetzt sie sind bei Raumtemperatur fest und klebfrei und sind nach der Salzbildung wasserverdünnbar.

Erfindungsgemäß bevorzugt werden die Polyamide und Polyesteramide auf Basis von Polycarbonsäuren und Polyaminen, Polyolen, Alkanolaminen, Aminocarbonsäuren bzw. deren Mischungen.

Als Polycarbonsäuren können hier neben den aliphatischen, cycloaliphatischen und aromatischen Säuren wie Adipinsäure, Sebazinsäure, Azelainsäure, Pimelinsäure, Isophthalsäure, Terephthalsäure, Phthalsäure, 1,4(1,3)-Cyclohexandicarbonsäure, 1,4(1,3)-Carboxymethyl-cyclohexan und gegebenenfalls kurzkettigen Monocarbonsäuren auch polymerisierte Fettsäuren mitverwendet werden. Diese polymerisierten Fettsäuren sind als Dimere Fettsäuren bekannt und werden durch Polymerisation von ungesättigten einbasischen aliphatischen Fettsäuren mit 16—22 Kohlenstoffatomen nach bekannten Methoden hergestellt. Typische im Handel erhältliche Dimere Fettsäuren haben etwa folgende Zusammensetzung:

| | |
|---|---|
| monomere Säuren | 0—5 Gew.-% |
| dimere Säuren | 60—95 Gew.-% |
| tri- und höherpolymerisierte Säuren | 1—35 Gew.-% |

wobei der Gehalt je nach Herkunft der Monomeren, des Polymerisationsverfahrens sowie des Aufbereitungsprozesses innerhalb dieser Grenzen schwanken kann.

Als Polymerbildner zur Herstellung der Polyamide, Polyesteramide/Polyester, kommen die üblichen aliphatischen und cycloaliphatischen heterocyclischen, gegebenenfalls auch aromatischen Verbindungen in Betracht, wie Ethylendiamin, Propylendiamin, Hexamethylendiamin, Trimethylhexamethylendiamin, Dimerylamin, Isophorondiamin, 3,3'-Dimethyl-4,4'-diamino-diphenylmethan, 4,4'-Diaminodiphenylmethyan, Xylylendiamin, Piperazin, N-Aminoethyl-piperazin, Diperazinylpropan, Polyetheramine der Formel III, Alkanolamine wie Ethanolamin, Propanolamin, Diethanolamin, Aminocarbonsäuren bzw. Lactame wie Aminocapronsäure, 11-Aminoundekansäure, Laurinlaktam, kurzkettige Alkohole wie 1,2-Dihydroxyethan, 1,3-Dihydroxybutan, 1,6-Dihydroxyhexan, Polyetherpolyole, hergestellt durch Alkoxylierung, insbesondere Ethoxylierung und/oder Propoxylierung von Diolen. Es können auch Mischungen oder Mischpolymerisate bzw. Mischkondensate der unterschiedlichen Harztypen eingesetzt werden.

Harze dieser Zusammensetzung sowie ihre Herstellung sind auf diesem Gebiet bekannt und werden beispielsweise in der oben angeführten Literatur beschrieben. Sie weisen Säurezahlen im Bereich von 40—200, insbesondere 50—120, auf. Die Begriffe Säure- und Aminzahl sind auf diesem Gebiet üblich zur Quantifizierung der freien Carboxylgruppen bzw. Amingruppen und werden angegeben in mg KOH pro g Substanz.

Die freien Carboxylgruppen der thermoplastischen Harze können zur Erzielung einer ausreichenden Wasser- bzw. Wasser/Alkohol-Löslichkeit direkt mit überschüssigem Amin gemäß einer oder mehrerer der oben angeführten Verbindungen versetzt werden und zwar in einem solchen Verhältnis, daß pro Carboxylgruppe des Harzes 1—10, insbesondere 1—4, Aminogruppen der oben genannten Amine kommen.

Es kann aber auch eine Adduktbildung zwischen dem Epoxidharz und überschüssigen Aminen gemäß B) erfolgen, wobei pro Epoxidgruppe 1—1,2 Mol Polyamin eingesetzt wird und dieses Addukt dann dem Carboxylgruppen enthaltenden Harz zur Salzbildung zugesetzt wird. Bevorzugte Addukte sind solche aus Ethylendiamin und Glycidethern des Hexandiols, Glycerins und Diglycerins.

Vorzugsweise wird jedoch so verfahren, daß Wasser bzw. ein Wasser/Alkoholgemisch im Verhältnis 1:9 bis 9:1 vorgelegt wird, wobei als Alkohol Ethanol, n-Propanol, iso-Propanol, bevorzugt wird, dann die drei Komponenten in der gewünschten Reihenfolge, vorzugsweise Amin — Epoxidharz — thermoplastisches Harz, nacheinander zugegeben und warm gelöst werden. Hierbei können die Komponenten auf einmal oder portionsweise zugegeben werden, wobei bei der portionsweisen Zugabe die Alkanolamine vorzugsweise zuletzt zugesetzt werden. Nach einer weniger bevorzugten Ausführungsform werden anstelle oder zusätzlich zu den Alkanol aminen übliche tert. Amine oder tert. Alkanolamine zugesetzt. Aufgrund ihrer teilweise großen Flüchtigkeit beim Druckvorgang belasten sie jedoch die Umwelt.

Die optimalen Mengenverhältnisse der härtbaren Mischung werden von der Art der jeweils verwendeten Ausgangsstoffe bestimmt und sollten (nach an sich bekannten Richtlinien) so gewählt werden, daß sofort nach dem Abdunsten des Lösungsmittels, d.h. des Wassers bzw. der Wasser/Alkohol-Mischung eine klebfreie Filmoberfläche erhalten wird, aber Löslichkeit und Verdünnbarkeit der härtbaren Mischung mit Wasser noch den Anforderungen der Praxis entsprechen. Das Verhältnis von Epoxidharz, thermoplastischem Harz und Amin (Salz) zur Herstellung der härtbaren Mischung ist unter Einhaltung der oben angegebenen Mengenverhältnisse und Bedingungen auch variierbar im Bereich von 0,5: 1 bis 1,5:1, insbesondere 0,7: 1 bis 1,3:1, vorzugsweise aber 0,95:1 bis 1,05:1, bezogen auf Epoxidgruppen und

reaktive Aminwasserstoffatome. Zur Härtung, d.h. Umsetzung mit den Aminogruppen, werden vorzugsweise die wasserlöslichen Glycidether des Glycerins und Diglycerins verwendet. Die Reaktion zwischen diesen Komponenten erfolgt während der Lagerung bei Raumtemperatur und ist nach ca. 7 Tagen soweit fortgeschritten, daß die Filme den Belastungen, insbesondere durch Wasser und wässrige Mischungen, unterworfen werden können.

Als Substrate, die mit den erfindungsgemäß verwendeten Druckfarben bedruckt werden können, gegebenenfalls noch unter Mitverwendung bekannter Pigmente, Farbstoffe, Beschleuniger, reaktiver Verdünner, Benetzungs- und Verlaufsmittel wie Ethylenglykolmonomethyl-, -ethyl- oder -butylether, kommen die bekannten Materialien für Verpackung und Werbung in Betracht wie Kunststoffolien aus Polyethylen, Polypropylen, Polyester, Papier, Kartonagen, metallbeschichtete Folien.

Herstellung der Harzlösungen

Beispiel 1

In einem 750 ml-Erlemeyerkolben wurden 115,0 g Wasser, 113,5 g Isopropanol, 5,0 g Ethylendiamin und 13,0 g Hexandioldiglycidyläther eingewogen und unter Rühren 5 h auf 60 bis 70°C erhitzt. Nach dem Abkühlen wurden 75 g Polyamidharz (Säurezahl 60) hinzugewogen und heiß unter Rühren gelöst. Nach dem Lösevorgang wurden 5,0 g 2-Amino-2-Methyl-1-Propanol eingerührt und abgekühlt.

Beispiel 2

In einem 750 ml Erlemeyerkolben wurden 115,0 g Wasser, 113,5 g Isopropanol, 5,0 g Ethylendiamin, 5,0 g 2-Amino-2-Methyl-1-Propanol und 13,0 g Hexandioldiglycidyläther eingewogen und unter Rühren 5 h auf 60 bis 70°C erhitzt. Nach dem Abkühlen wurden 75 g Polyamidharz (Säurezahl 60) hinzugezogen, heiß unter Rühren gelöst und abgekühlt.

Beispiel 3

In einem 750 ml-Erlemeyerkolben wurden 115,0 Wasser, 119,5 g Isopropanol, 5,0 g Ethylendiamin, 13,0 g Hexandioldiglycidyläther und 75,0 g Polyamidharz (Säurezahl 60) eingewogen und in der Siedehitze gelöst. Nach diesem Lösevorgang wurden 5,0 g 2-Amino-2-methyl-1-Propanol eingerührt und abgekühlt.

Herstellung des Druckfilms

Zur Weiterverarbeitung wurden jeweils 250,0 g der Lösungen nach den Beispielen 1—3 mit 30,0 g eines Rotpigments (Litholschlarlach 3700 (BASF)) in einem Dissolver pigmentiert, die berechnete Menge einer Glycidylverbindung (37,1 g Glycidylverbindung Nr. 3 aus Tabelle 1) hinzugemischt, mit Wasser auf eine Auslaufzeit von 18—20 sec (DIN 4 Auslaufbecher) verdünnt und mit einer Tiefdruckmaschine* bei Raumtemperatur auf druckvorbehandelte Polyäthylenfolie aufgedruckt und in üblicher Weise mit Warmluft getrocknet. Hierbei wurde die bedruckte Foliennach dem Druck- und Trockenvorgang sofort wieder in der Maschine aufgerollt. Beim späteren Abrollen war kein Verkleben oder Verblocken zu beobachten. Nach einer Lagerzeit von 7 Tagen bei Raumtemperatur wurden die Drucke einem normalen Haftungstest, einem Haftungstest nach 24 Stunden Lagerung der Drucke in Wasser und einem "Crinkle"-Test unterzogen.

Beschreibung der Testmethoden

1. Haftfestigkeit

Die Prüfung der Haftfestigkeit von Druckfilmen auf einem Druckträger erfolgt mit Tesafilm®-Streifen. Jeweils 10 aufgeklebte Streifen werden schnell oder langsam abgerissen.

Bewertung:

| | |
|---|---|
| 1 sehr gut | (Film enwandfrei) |
| 2 gut | (vereinzelte, punktförmige Beschädigungen) |
| 3 befriedigend | (sichtbare Beschädigungen) |
| 4 ausreichend | (großflächige Beschädigungen) |
| 5 mangelhaft | (Film zerstört, praktisch keine Haftung) |

2. "Crinkle"-Test

Dieser Test sieht vor, die erhaltenen, gelagerten Druckfilme auf Polyäthylen 24 h in Wasser von 20—23°C zu tauchen und dann sofort nach der Herausnahme aus dem Medium Druckbild gegen Druckbild mit den Handballen unter Andruck gegeneinander zu scheuern und zu knittern.

Beurteilung:

1. Druckfilm bleibt vollkommen erhalten
2. Druckfilm weist Risse auf
3. Druckfilm zeigt flächig abgelöste Stellen
4. Druckfilm ist praktisch zerstört
5. Druckfilm zeigt bereits *ohne* Scheuern flächige Ablösungen.

---

*) Modell BT der Fa. Kochsiek

TABELLE 1

| Nr. | Glycidylverbindungen | Epoxidwert |
|---|---|---|
| 1 | Glycidyläther des Hexandiols | 0,61 |
| 2 | Glycidyläther des Neopentylglykols | 0,67 |
| 3 | Glycidyläther des Glycerins | 0,63 |
| 4 | Glycidyläther des Diglycerins | 0,66 |
| 5 | Glycidyläther des Trimethylolpropans | 0,43 |

TABELLE 2

| Nr. | Aminverbindungen | Molekular-gewicht | Aminwasserstoff-Äquivalentgewicht |
|---|---|---|---|
| 1 | Ethylendiamin | 60 | 15 |
| 2 | Diethylentriamin | 103 | 21 |
| 3 | Triethylentetramin | 146 | 24 |
| 4 | Butandiolätherdiamin | 202 | 50 |
| 5 | N-Aminoäthylpiperazin | 129 | 43 |
| 6 | Äthanolamin | 61 | 31 |
| 7 | 2-Amino-2-Methyl-1-Propanol | 89 | 45 |
| 8 | Dipropylentriamin | 131 | 27 |

TABELLE 3

| Nr. | Thermoplastische Harze | Säurezahl |
|---|---|---|
| 1 | Polyamidharze auf Basis dimerisierter Fettsäure, Isophthalsäure, Ethylendiamin und Diaminodimethyldicyclohexylmethan | 60 |
| 2 | Polyamidharz auf Basis dimerisierter Fettsäure, Isophthalsäure, Ethylendiamin und Diaminodimethyldicyclohexylmethan | 80 |
| 3 | Polyamidharz auf Basis Adipinsäure, Stearinsäure und Isophorondiamin | 100 |
| 4 | Polyamidharz auf Basis dimerisierter Fettsäure, Isophthalsäure, Ethylendiamin und Butandiolätherdiamin | 50 |
| 5 | Polyamidharz auf Basis dimersierter Fettsäure, Isophthalsäure, Ethylendiamin, Isophorondiamin und Caprolactam | 70 |
| 6 | Polyamidharz auf Basis dimerisierter Fettsäure, Isophthalsäure, Ethylendiamin, Isophorondiamin und 11-Aminoundecansäure | 70 |
| 7 | Polyesteramid auf Basis dimerisierter Fettsäure, Isophthalsäure, Ethylendiamin, Isophorondiamin und Äthanolamin | 100 |
| 8 | Polyesteramid auf Basis dimerisierter Fettsäure, Isophthalsäure, Ethylendiamin und Diglykolamin | 70 |

TABELLE 3 (Fortsetzung)

| Nr. | Thermoplastische Harze | Säurezahl |
|---|---|---|
| 9 | Polyesteramid auf Basis dimerisierter Fettsäure, Isophthalsäure, Ethylendiamin und Dimethylolcyclohexan | 80 |
| 10 | Polyacrylatharz[1)] | 200 |
| 11 | Vinylacetat/Crotonsäure-Copolymer[2)] | 50 |
| 12 | Maleinatharz[3)] | 200 |
| 13 | Kolphoniummodifiziertes Phenolharz[4)] | 160 |
| 14 | Lineares, gesättigtes, ölfreies Polyesterharz (Phthalatharz)[5)] | 100 |
| 15 | Copolymerisat aus Styrol und Maleinsäureester[6)] | 150 |

1) Joncryl® 67 /Fa. Johnson Wax
2) Mowilith® CT5 /Fa. Hoechst
3) Rokramar® 2051 /Fa. Krämer
4) Rokrapal® SH /FA. Krämer
5) Erkarex® 1565 /Fa. Krämer
6) Suprapal® AP 20 /Fa. BASF

TABELLE 4
(30% Festkörper enthaltende Lösungen)

| Nr. | Glycidylverbind. Tabelle 1 Nr. | g | Aminverbind. Tabelle 2 Nr. | g | Thermopl. Harz Tabelle 3 Nr. | g. | Lösungsmittel Wasser g | Alkohol g | Sonstige g |
|---|---|---|---|---|---|---|---|---|---|
| 1* | 1 | 2,6 | 1<br>7 | 1,0<br>1,0 | 1 | 15,0 | 23,0 | 27,7[1)] | — |
| 2** | 3 | 3,4 | 1<br>7 | 1,3<br>1,0 | 2 | 15,0 | 25,0 | 23,3[1)] | — |
| 3** | 1 | 4,4 | 1<br>7 | 1,6<br>1,0 | 3 | 15,0 | 25,0 | 26,3[3)] | — |
| 4** | 2 | 3,2 | 1<br>7 | 1,3<br>1,8 | 2 | 15,0 | 25,0 | 24,7[3)] | — |
| 5** | 4 | 3,3 | 1<br>6 | 1,3<br>2,0 | 2 | 15,0 | 35,0 | 25,4[2)] | — |
| 6** | 5 | 3,8 | 1<br>7 | 1,0<br>1,0 | 1 | 15,0 | 24,4 | 23,6[2)] | — |
| 7** | 1 | 3,5 | 2<br>7 | 2,2<br>1,8 | 2 | 15,0 | 26,0 | 26,7[2)] | — |
| 8** | 1 | 2,7 | 3<br>7 | 2,3<br>2,0 | 1 | 15,0 | 27,0 | 27,8[2)] | — |
| 9** | 1 | 3,5 | 5<br>7 | 2,8<br>1,0 | 2 | 15,0 | 26,0 | 16,0[2)] | Dowanol PM 4) 10,0 |
| 10** | 1 | 2,7 | 4<br>7 | 3,2<br>2,0 | 1 | 15,0 | 29,0 | 28,9[2)] | — |

TABELLE 4 (Forsetzung)
(30% Festkörper enthaltende Lösungen)

| Nr. | Glycidyl-verbind. Tabelle 1 Nr. | g | Aminver-bind. Tabelle 2 Nr. | g | Thermopl. Harz Tabelle 3 Nr. | g. | Lösungsmittel Wasser g | Alkohol g | Sonstige g |
|---|---|---|---|---|---|---|---|---|---|
| 11** | 1 | 7,0 | 1 | 2,6 | 2 | 15,0 | 28,7 | 28,7[2)] | — |
| 12** | 1 | 2,6 | 1<br>7 | 1,0<br>1,0 | 1 | 15,0 | 4,6 | 41,1[1)] | — |
| 13** | 1 | 2,6 | 1<br>7 | 1,0<br>1,0 | 1 | 15,0 | 36,1 | 4,6[2] | Butylglykol<br>5,0 |
| 14** | 1 | 2,6 | 1<br>7 | 1,0<br>1,0 | 1 | 15,0 | 35,0 | — | 10,7 |
| 15** | 1 | 2,6 | 1<br>7 | 1,0<br>1,0 | 1 | 15,0 | 22,0 | 23,7[1)] | — |
| 16*** | 1 | 2,6[6)] | 1<br>7 | 1,0[6)]<br>1,0 | 1 | 15,0 | 22,0 | 23,7[3)] | — |
| 17** | 1 | 2,6[7)] | 1<br>7 | 1,0[7)]<br>1,0[7)] | 1 | 15,0 | 22,0 | 23,7[3)] | — |
| 18** | 1 | 2,6 | 1[8)] | 1,0<br>1,5 | 1 | 15,0 | 23,0 | 23,9[3)] | — |
| 19** | 1 | 3,5 | 1[9)] | 1,3<br>1,0 | 2 | 15,0 | 24,0 | 24,5[1)] | — |
| 20** | — | — | 1 | 2,0 | 2 | 15,0 | 19,0 | 20,6[3)] | — |
| 21** | 1<br>10) | 1,3<br>1,5 | 1<br>7 | 1,0<br>1,0 | 1 | 15,0 | 23,0 | 23,1[2)] | — |
| 22** | 1 | 5,3 | 8<br>7 | 4,2<br>4,0 | 1 | 30,0 | 50,0 | 50,0[2)] | — |
| 23** | 1 | 4,4 | 1<br>7 | 1,6<br>2,0 | 10 | 15,0 | 25,0 | 25,0[2)] | — |
| 24** | 1 | 2,2 | 1<br>7 | 0,8<br>0,5 | 11 | 15,0 | 25,0 | 23,0[2)] | 2,0[5)] |
| 25** | 1 | 4,4 | 1<br>7 | 1,6<br>4,0 | 12 | 15,0 | 25,0 | 23,0[2] | 2,0[5)] |
| 26** | 1 | 6,2 | 1<br>7 | 2,2<br>4,0 | 13 | 15,0 | 25,0 | 23,0[2)] | 2,0[5)] |
| 27** | 1 | 4,4 | 1<br>7 | 1,6<br>4,0 | 14 | 15,0 | 25,0 | 23,0[2)] | 2,0[5)] |
| 28** | 1 | 3,5 | 1<br>7 | 2,6<br>2,0 | 15 | 15,0 | 25,0 | 23,0[5)] | 2,0[5)] |
| 29** | 1 | 2,2 | 1<br>7 | 0,8<br>4,5 | 4 | 15,0 | 25,0 | 25,0[2)] | — |
| 30** | 1 | 3,1 | 1<br>7 | 1,1<br>2,0 | 5 | 15,0 | 25,0 | 25,0[2)] | — |

TABELLE 4 (Forsetzung)
(30% Festkörper enthaltende Lösungen)

| Nr. | Glycidylverbind. Tabelle 1 Nr. | g | Aminverbind. Tabelle 2 Nr. | g | Thermopl. Harz Tabelle 3 Nr. | g. | Lösungsmittel Wasser g | Alkohol g | Sonstige g |
|---|---|---|---|---|---|---|---|---|---|
| 31** | 1 | 3,1 | 1<br>7 | 1,1<br>2,0 | 6 | 15,0 | 25,0 | 25,0 2) | — |
| 32** | 1 | 4,4 | 1<br>7 | 1,6<br>5,5 | 7 | 15,0 | 25,0 | 25,0 2) | — |
| 33** | 1 | 3,1 | 1<br>7 | 1,1<br>4,0 | 8 | 15,0 | 25,0 | 25,0 2) | — |
| 34** | 1 | 3,5 | 1<br>7 | 1,3<br>4,0 | 9 | 15,0 | 25,0 | 25,0 2) | — |
| 35 0) | — | — | 7 | 2,5 | 2 | 15,0 | 20,0 | 20,8 2) | — |
| 36 0) | — | — | 9) | 2,5 | 1 | 15,0 | 20,0 | 20,8 2) | — |
| 37 0) | 1 | 3,5 | 6<br>7 | 1,3<br>1,0 | 2 | 15,0 | 24,0 | 25,2 2) | — |

1) = Äthanol
2) = Isopropanol
3) = n-Propanol
4) = Propylenglykolmonomethyläther
5) = Butylglykol
6) = Adduktbildung wurde vor dem Lösen des thermoplastischen Harzes 1 (Tabelle 3) durchgeführt!
7) = Die Amine wurden zusammen zum Lösen des thermoplastischen Harzes 1 (Tabelle 3) verwendet: erst danach erfolgte die Adduktbildung
8) = Ammoniak
9) = Triäthylamin
10) = Butylglycidyläther
0) = Vergleichsbeispiele
* = vgl. Herstellung der Harzlösung Beispiel 2 (S 12)
** = vgl. Herstellung der Harzlösung Beispiel 3 (S 12)
*** = vgl. Herstellung der Harzlösung Beispiel 1 (S 12)

TABELLE 5

| Nr. | Mischung Tabelle 4 Nr. | g | Glycidylverbind. Tabelle 1 Nr. | g. | Tesa-Test 1) nach RT*-Lagerung | Tesa-Test 1) nach 24 Std. $H_2O$**-Lagerung | "Crinkle"-Test nach 24 Std. $H_2O$-Lager. |
|---|---|---|---|---|---|---|---|
| 1 | 1 | 65.3 | 3 | 10,7 | 1—2 | 1—2 | 1 |
| 2 | 2 | 69,0 | 1 | 13,6 | 1 | 1—2 | 2 |
| 3 | 3 | 73,3 | 4 | 15,2 | 1—2 | 1—2 | 1—2 |
| 4 | 4 | 71,0 | 3 | 15,8 | 1—2 | 2 | 1—2 |
| 5 | 5 | 72,0 | 3 | 20,6 | 2 | 2 | 1 |
| 6 | 6 | 68,4 | 3 | 10,9 | 1—2 | 1—2 | 1—2 |
| 7 | 7 | 75,3 | 3 | 19,2 | 1 | 1—2 | 1—2 |
| 8 | 8 | 78,3 | 3 | 19,0 | 1—2 | 1—2 | 1—2 |

TABELLE 5 (Fortsetzung)

| Nr. | Mischung Tabelle 4 Nr. | g | Glycidyl-verbind. Tabelle 1 Nr. | g. | Tesa-Test 1) nach RT*-Lagerung | Tesa-Test 1) nach 24 Std. $H_2O$**-Lagerung | "Crinkle"-Test nach 24 Std. $H_2O$-Lager. |
|---|---|---|---|---|---|---|---|
| 9 | 9 | 74,3 | 3 | 13,3 | 1—2 | 2 | 2 |
| 10 | 10 | 82,7 | 3 | 13,9 | 1—2 | 2 | 2 |
| 11 | 11 | 82,0 | 4 | 19,4 | 1 | 2 | 1 |
| 12 | 12 | 65,3 | 4 | 10,7 | 1 | 1—2 | 1 |
| 13 | 13 | 65,3 | 4 | 10,7 | 2 | 2 | 1 |
| 14 | 14 | 65,3 | 4 | 10,7 | 2 | 2 | 1 |
| 15 | 15 | 65,3 | 3 | 18,1 | 1—2 | 2 | 1—2 |
| 16 | 16 | 65,3 | 3 | 10,7 | 2 | 2 | 1 |
| 17 | 17 | 65,3 | 3 | 10,7 | 1—2 | 1—2 | 1—2 |
| 18 | 18 | 67,0 | 4 | 7,3 | 1—2 | 1—2 | 2 |
| 19 | 19 | 69,3 | 3 | 10,1 | 1 | 1—2 | 1—2 |
| 20 | 20 | 56,6 | 4 | 20,2 | 1—2 | 1—2 | 2 |
| 21 | 21 | 66,0 | 4 | 10,4 | 1—2 | 1—2 | 2 |
| 22 | 22 | 143,5 | 3 | 32,8 | 1 | 1—2 | 1—2 |
| 23 | 23 | 71,0 | 3 | 18,9 | 1 | 1—2 | 1 |
| 24 | 24 | 68,5 | 4 | 7,7 | 1—2 | 1—2 | 1 |
| 25 | 25 | 75,0 | 4 | 24,5 | 1—2 | 2 | 1—2 |
| 26 | 26 | 75,4 | 3 | 30,0 | 1 | 1—2 | 1 |
| 27 | 27 | 73,0 | 3 | 25,1 | 2 | 2 | 1 |
| 28 | 28 | 73,1 | 3 | 19,1 | 2 | 2 | 1 |
| 29 | 29 | 70,1 | 3 | 20,3 | 1—2 | 2 | 1—2 |
| 30 | 30 | 71,2 | 3 | 15,1 | 2 | 2 | 1 |
| 31 | 31 | 71,2 | 3 | 15,1 | 1—2 | 1—2 | 1—2 |
| 32 | 32 | 73,0 | 3 | 29,8 | 1—2 | 1—2 | 1—2 |
| 33 | 33 | 71,2 | 3 | 21,3 | 2 | 2 | 2 |
| 34 | 34 | 71,8 | 3 | 22,6 | 1—2 | 1—2 | 1—2 |
| 35[0)] | 38 | 58,3 | 3 | 7,7 | 1—2 | 4—5 | 5 |
| 36[0)] | 39 | 58,3 | — | — | 1—2 | 3—4 | 5 |
| 37[0)] | 40 | 70,0 | 3 | 6,5 | 1 | 4—5 | 4 |

Footnotes to Table 5:

°) = Vergleichsbeispiele
* = Normklima 23°C/50% relative Luftfeuchtigkeit
** = Entsalztes Wasser 23°C
1) 1= sehr gut (Film einwandfrei)
2 = gut (vereinzelte, punktförmige Beschädigungen
3 = befriedigend (sichtbare Beschädigungen)
4 = ausreichend (großflächige Beschädigungen)
5 = mangelhaft (Film zerstört)

**Patentansprüche**

1. Verwendung von härtbaren Kunstharzmischungen, die nach dem Abdunsten des Lösungsmittels physikalische trockene und klare Filme ergeben und die bei Raumtemperatur bzw. wenig erhöhter Temperatur aushärten, als Bindemittel für Oberflächenbeschichtungen und Druckfarben für den Tief-, Flexo- und Siebdruck, dadurch gekennzeichnet, daß die Kunstharzmischungen bestehen aus

A) mindestens aliphatischen Glycidylverbindung mit mehr als einer Epoxidgruppe pro Molekül und

B) 1. aliphatischen Aminen der allgemeinen Formel

$$H_2N-(CHR)_x-NH_2 \qquad I$$

in welcher R Wasserstoff oder als Alkylrest mit 1—4 C-Atomen und x ein Wert von 2—6 sein kann und/oder

2. Polyalkylenpolyaminen der allgemeinen Formel

$$H_2N-[(CHR)_x-NH-]_y H \qquad II$$

in welcher R und x die obengenannte Bedeutung und y die Werte 2—4 haben kann und/oder

3. Polyätheraminen der allgemeinen Formel

$$H_2N-(CH_2)_n-O-[R^1-O]_z-(CH_2)_n-NH_2 \qquad III$$

in welcher $R^1$ ein gegebenenfalls substituierter Alkylrest mit 1—4 Kohlenstoffatomen, z = 0, 1, 2 oder 3 und n = 2—5 sein kann und/oder

4. heterocyclische Amine der allgemeinen Formel

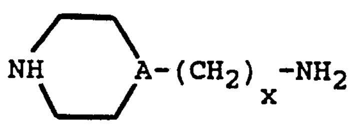

IV

in welcher A = C oder N und x ein Wert von 2—6 sein kann und/oder

5. Alkanolamine der allgemeinen Formel

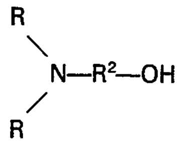

V

mit $R^2 = (CRR)_x$—
worin R und x die oben angegebene Bedeutung haben oder $R^2 = -(CHC_2)_2-O-(CH_2)_2$ und/oder

6. Addukten mit freien Amingruppen aus

a) aliphatischen Glycidylverbindungen gemäß A) und

b) mindestens einem der Amine 1. bis 4. und gegebenenfalls bis 50 Äquivalent-% eines der Amine gemäß 5.,

und worin pro Epoxidgruppe gemäß a) 1 bis 1,2 Mol des Amins 1. bis 4. eingesetzt wird und

C) thermoplastischen Harzen mit freien Carboxylgruppen und einer Säurezahl von 40—200

und wobei pro Carboxylgruppe gemäß C) 1 bis 10 Aminogruppen eines oder mehrerer der Amine gemäß B) kommen und

D) Lösungsmitteln oder Lösungsmittelmischungen und gegebenenfalls

E) Pigmenten, Farbstoffen, Beschleunigern, reaktiven Verdünnern, Streck-, Benetzungs- und Verlaufsmitteln, Modifizierungsmitteln.

2. Verwendung von härtbaren Kunstharzmischungen gemäß Anspruch 1, dadurch gekennzeichnet, daß als aliphatische Glycidylverbindungen gemäß A) Glycidyläther mit Epoxidwerten von 0,4 bis 0,7 verwendet werden.

3. Verwendung von härtbaren Kunstharzmischungen gemäß Ansprüchen 1 und 2, dadurch gekennzeichnet, daß die Glycidyläther A) auf Basis von Hexandiol, Neopentylglykol, Trimethylolpropan, Glycerin, Diglycerin, Pentaerythrit verwendet werden.

4. Verwendung von härtbaren Kunstharzmischungen gemäß den Ansprüchen 1 bis 3, dadurch gekennzeichnet, daß als Aminverbindungen gemäß B) aliphatische Amine der allgemeinen Formeln I und/oder II verwendet werden.

5. Verwendung von härtbaren Kunstharzmischungen gemäß den Ansprüchen 1 bis 3, dadurch gekennzeichnet, daß als Aminverbindungen Addukte aus Aminen der allgemeinen Formeln I und/oder II mit Glycidethern des Hexandiols, Glycerins und Diglycerins eingesetzt werden.

6. Verwendung von härtbaren Kunstharzmischungen gemäß Anspruch 5, dadurch gekennzeichnet, daß pro Epoxidgruppe der Glycidylether etwa 1 Mol Amin eingesetzt wird.

7. Verwendung von härtbaren Kunstharzmischungen gemäß Ansprüchen 1 bis 6, dadurch gekennzeichnet, daß als thermoplastische Harze gemäß C) Polyaminoamide bzw. Polyesteramide auf Basis von polymerisierten Fettsäuren und Polyaminen und/oder Alkanolaminen, Polyacrylate, Polymethacrylate, mit Säurezahlen von 50—120 verwendet werden.

8. Verwendung von härtbaren Kunstharzmischungen gemäß Anspruch 7, dadurch gekennzeichnet, daß zur Salzbildung pro Carboxylgruppe der Harze gemäß C) 1 bis 4 Aminogruppen der Amine gemäß B) verwendet werden.

9. Verwendung von härtbaren Kunstharzmischungen gemäß Ansprüchen 1 bis 8, dadurch gekennzeichnet, daß die Glycidylverbindungen gemäß A) in Mengen von 0,5:1 bis 1,5:1, bezogen auf Aminwasserstoffatome, verwendet werden.

10. Verfahren zur Herstellung härtbarer Kunstharzmischungen, dadurch gekennzeichnet, daß zu einer Alkohol/Wassermischung (1:9) Amin, Epoxidharz und thermoplastisches Harz nacheinander zugegeben und warm gelöst werden.

**Revendications**

1. Utilisation de mélanges de résines synthétiques durcissables, qui donnent, après évaporation du solvant, des pellicules physiquement sèches ou limpides et qui durcissent à la température ambiante ou à une température peu élevée, comme liant pour des revêtements de surfaces et des encres d'impression pour l'impression en héliogravure, en flexographie et en sériegraphite, utililsation caractérisée en ce que les mélanges de résines synthétiques consistent:

A) au moins un composé glycidylique aliphatique comportant plus d'un groupe époxyde par molécule, et

B) 1. des amines aliphatiques de formule générale:

$$H_2N-(CHR)_x-NH_2 \qquad I$$

dans laquelle R peut représenter un atome d'hydrogène ou un reste alkyle ayant 1 à 4 atomes de carbone, et x peut valoir 2 à 6, et/ou

2. des polyalkylènepolyamines de formule générale:

$$H_2N-[(CHR)_x-NH-]_y H \qquad II$$

dans laquelle R et x peuvent avoir les sens précités et y peut valoir 2 à 4, et/ou

3. des polyétheramines de formule générale:

$$H_2N-(CH_2)_n-O-(R^1-O)_z-(CH_2)_n-NH_2 \qquad III$$

dans laquelle $R^1$ peut représenter un reste alkyle, éventuellement substitué, comportant 1 à 4 atomes de carbone, z peut valoir 0, 1, 2 ou 3 et n peut valoir 2 à 5; et/ou

4. des amines hétérocycliques de formule générale:

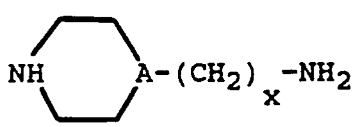

IV

dans laquelle A peut représenter C ou N, et x peut valoir 2 à 6, et/ou

5. des alcanolamines de formule générale;

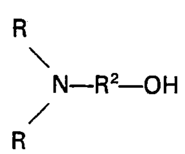

V

dans laquelle $R^2$ représente $(CRR)_x$—, où R et x ont le sens précité, ou bien $R^2$ représente —$(CH_2)_2$—O—$(CH_2)_2$, et/ou

6. des produits d'addition, comportant des groupes amino libres

a) de composés glycidyliques aliphatiques selon A) et

b) d'au moins l'une des amines 1 à 4 et éventuellement jusqu'à 50 équivalents % d'une des amines selon 5.

et où l'on utilise, par groupe époxyde selon a), 1 à 1,2 mole de l'amine 1 à 4, et

C) des résines thermoplastiques comportant des groupes carboxyles libres et ayant un indice d'acide de 40 à 200,

et, par groupe carboxyle selon C), il y a 1 à 10 groupes amino d'une ou plusieurs des amines selon B), et

D) des solvants ou des mélanges de solvants, et éventuellement

E) des pigments, des colorants, des accélérateurs, des diluants réactifs, des agents d'allongement, des agents de mouillage et des agents de fluidité ou d'écoulement, des agents modificateurs.

2. Utilisation de mélanges de résines synthétiques durcissables selon la revendication 1, caractérisée en ce qu'on utilise, comme composés gycidyliques aliphatiques selon A), des éthers glycidyliques ayant des valeurs de l'indice d'époxyde de 0,4 à 0,7.

3. Utilisation de mélanges de résines synthétiques durcissables selon les revendications 1 ou 2, caractérisée en ce que l'on utilise l'éther glycidylique A) à base d'hexanediol, de néopentyl-glycol, de triméthylolpropane, de glycérol, de diglycérol, de pentaérythritol.

4. Utilisation de mélanges de résines synthétiques durcissables selon les revendications 1 à 3, caractérisée en ce qu'on utilise, comme amines selon B), des amines aliphatiques répondant aux formules générales 1 et/ou 2.

5. Utilisation de mélanges de résines synthétiques durcissables selon les revendications 1 à 3, caractérisée en ce qu'on utilise comme amines des produits d'addition d'amines répondant aux formules générales 1 et/ou 2 avec des éthers glycidyliques de l'hexanediol, du glycérol et du diglycérol.

6. Utilisation de mélanges de résines synthétiques durcissables selon la revendication 5, caractérisée en ce qu'on utilise, par groupe époxyde de l'éther glycidylique, environ 1 mole d'amine.

7. Utilisation de mélanges de résines synthétiques durcissables selon les revendications 1 à 6, caractérisée en ce qu'on utilise comme résines thermoplastiques selon C), des polyaminoamides ou des polyesteramides à base d'acides gras polymérisés et de polyamines et/ou d'alacanolamines, de polyacrylates, de polyméthacrylates, ayant des indices d'acides de 50 à 120.

8. Utilisation de mélanges de résines synthétiques durcissables selon la revendication 7, caractérisée en ce qu'on utilise, pour former des sels, un à quatre groupes amino des amines selon B) par groupe carboxyle des résines selon C).

9. Utilisation de mélanges de résines synthétiques durcissables selon les revendications 1 à 8, caractérisée en ce qu'on utilise les composés glycidyliques selon A) en des quantités de 0,5:1 à 1,5:1, sur la base des atomes d'hydrogène de fonction amine.

10. Procédé pour préparer des mélanges de résines synthétiques durcissables, caractérisé en ce qu'on adjoute, à un mélange à 1:9 alcool/eau, de la résine époxyde et de la résine thermoplastique, successivement, et l'on dissout à chaud.

**Claims**

1. The use of curable synthetic resin mixtures which, after evaporation of the solvent, give physically dry and clear films and which cure at room temperature or slightly elevated temperatures, as binders for surface coatings and printing inks for gravure printing, flexographic printing and screen printing, characterised in that the synthetic resin mixtures consist of

A) at least one aliphatic glycidyl compound having more than one epoxy group per molecule and

B) 1. aliphatic amines of the general formula

$$H_2N—(CHR)_x—NH_2 \qquad I$$

wherein R may be hydrogen or an alkyl radical having from 1 to 4 carbon atoms and x may be from 2 to 6, and/or

2. polyalkylene polyamines of the general formula

$$H_2N—[(CHR)_x—NH]_y—H \qquad II$$

wherein R and x may have the meanings given above and y may be from 2 to 4, and/or

3. polyether amines of the general formula

$$H_2N—(CH_2)_n—O—[R^1—O]_z—(CH_2)_n—NH_2 \qquad III$$

wherein $R^1$ may be an optionally substituted alkyl radical having from 1 to 4 carbon atoms, z may be 0, 1, 2 or 3 and n may be from 2 to 5, and/or

4. heterocyclic amines of the general formula

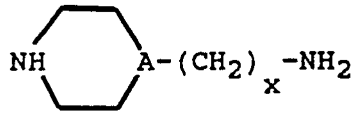

IV

wherein A is C or N and x may be from 2 to 6, and/or

5. alkanolamines of the general formula

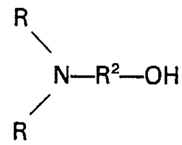

V

wherein $R^2$ is $(CRR)_x$— and R and x have the meanings given above, or $R^2$ is $—(CH_2)_2—O—(CH_2)_2—$, and/or

6. adducts having free amine groups consisting of

a) aliphatic glycidyl compounds according to A) and

b) at least one of the amines 1. to 4. and optionally up to 50 equivalent percent of one of the amines according to 5.,

and wherein from 1 to 1.2 moles of the amine 1. to 4. is used per epoxy group according to a), and

C) thermoplastic resins having free carboxy groups and an acid number of from 40 to 200, there being from 1 to 10 amino groups of one or more amines according to B) per carboxy group according to C), and

D) solvents or solvent mixtures and, optionally,

E) pigments, dyes, accelerators, reactive diluents, extenders, wetting and flow control agents, modifiers.

2. The use of curable synthetic resin mixtures according to claim 1, characterised in that the aliphatic glycidyl compounds used according to A) are glycidyl ethers having epoxy values of from 0.4 to 0.7.

3. The use of curable synthetic resin mixtures according to claims 1 and 2, characterised in that the glycidyl ethers A) used are based on hexanediol, neopentyl glycol, trimethylol propane, glycerol, diglycerol, pentaerythritol.

4. The use of curable synthetic resin mixtures according to claims 1 to 3, characterised in that the amine compounds used according to B) are aliphatic amines of the general formulae I and/or II.

5. The use of curable synthetic resin mixtures according to claims 1 to 3, characterised in that the amine compounds used are adducts of amines of the general formulae I and/or II with glycidyl ethers of hexanediol, glycerol and diglycerol.

6. The use of curable synthetic resin mixtures according to claim 5, characterised in that approximately 1 mole of amine is used per epoxy group of the glycidyl ethers.

7. The use of curable synthetic resin mixtures according to claims 1 to 6, characterised in that the thermoplastic resins used according to C) are polyaminoamides or polyester amides based on polymerised fatty acids and polyamines and/or alkanolamines, or polyacrylates or polymethacrylates having acid numbers of from 50 to 120.

8. The use of curable synthetic resin mixtures according to claim 7, characterised in that, for salt formation, from 1 to 4 amino groups of the amines according to B) are used per carboxy group of the resins according to C).

9. The use of curable synthetic resin mixtures according to claims 1 to 8, characterised in that the glycidyl compounds according to A) are used in amounts of from 0.5:1 to 1.5:1, based on amine hydrogen atoms.

10. A process for the preparation of curable synthetic resin mixtures, characterised in that amine, epoxy resin and thermoplastic resin are added successively to an alcohol/water mixture (1:9) and are dissolved with heating.